# EUROPEAN PATENT APPLICATION

(11) **EP 4 579 421 A1**
(43) Date of publication of application: **02.07.2025**
(21) Application number: 24206228.9
(22) Date of filing: 11.10.2024
(51) Int. Cl.: G06F 3/04883, G06F 3/04886

(54) **METHOD AND DEVICE FOR DISPLAYING VIRTUAL KEYBOARD, TERMINAL AND READABLE STORAGE MEDIUM**

(30) Priority: 26.12.2023 CN 202311810757
(71) Applicant: Beijing Xiaomi Mobile Software Co., Ltd., Beijing 100085 (CN)
(72) Inventor: ZHOU, Jian, Beijing, 100085 (CN)
(74) Representative: Dehns Germany Partnerschaft mbB

(57) **Abstract**

A method for displaying a virtual keyboard, includes: in response to a display style change operation for a currently displayed virtual keyboard, determining a target style corresponding to the display style change operation; wherein the virtual keyboard currently displayed by a terminal and a virtual keyboard corresponding to the target style are different in at least one of: a keyboard type, a display area, or a display position; and controlling the virtual keyboard to be displayed in the target style.

## Description

### TECHNICAL FIELD

The present disclosure relates to intelligent terminals, and in particular to a method and device for displaying a virtual keyboard, a terminal and a readable storage medium.

### BACKGROUND

Terminals are typically configured with virtual keyboards to facilitate users to input, and the simplicity and convenience of the input manner by means of the virtual keyboards are generally accepted by the users.

In the related arts, display styles of the virtual keyboards are associated with display modes of display interfaces of the terminals, and it is impossible to flexibly switch keyboard styles, which causes the occurrence of a phenomenon in which the user input is inconvenient and the users' usage experience is affected.

### SUMMARY

In order to overcome problems in the related arts, the present disclosure provides a method and device for displaying a virtual keyboard, a terminal and a readable storage medium.

In a first aspect of the present disclosure, there is provided a method for displaying a virtual keyboard, and the method includes:
in response to a display style change operation for a currently displayed virtual keyboard, determining a target style corresponding to the display style change operation; wherein the virtual keyboard currently displayed by a terminal and a virtual keyboard corresponding to the target style are different in at least one of: a keyboard type, a display area, or a display position; and
controlling the virtual keyboard to be displayed in the target style.

In some embodiments of the present disclosure, in response to the display style change operation for the currently displayed virtual keyboard, determining the target style corresponding to the display style change operation includes:
in response to the display style change operation, determining a second style as the target style if a display style of the currently displayed virtual keyboard is a first style; or
in response to the display style change operation, determining the first style as the target style if the display style of the currently displayed virtual keyboard is the second style;
wherein an area ratio between the virtual keyboard in the first style and a display screen of the terminal is greater than an area ratio between the virtual keyboard in the second style and the display screen.

In some embodiments of the present disclosure, the display style change operation includes a movement operation for the virtual keyboard;
in response to the display style change operation for the currently displayed virtual keyboard, determining the target style corresponding to the display style change operation includes:
in response to the movement operation, determining the target style according to a position of an operation end point of the movement operation.

In some embodiments of the present disclosure, determining the target style according to the position of the operation end point of the move operation includes:
if the display style of the currently displayed virtual keyboard is the first style, and the operation end point of the movement operation is located in a first region, determining the second style as the target style; or
if the display style of the currently displayed virtual keyboard is the second style, and the operation end point of the movement operation is located in a second region, determining the first style as the target style;
wherein the first region is located outside a display position of the virtual keyboard corresponding to the first style, and the second region is overlapped with the display position of the virtual keyboard corresponding to the first style.

In some embodiments of the present disclosure, if the terminal is in a split-screen display mode, the terminal includes a first split-screen interface and a second split-screen interface, the display position of the virtual keyboard corresponding to the first style is overlapped with a part of the first split-screen interface and a part of the second split-screen interface, and the first region includes a first sub-region located in the first split-screen interface and a second sub-region located in the second split-screen interface;
controlling the virtual keyboard to be displayed in the target style includes:
if the operation end point of the movement operation is located in the first sub-region, controlling the virtual keyboard to be displayed in the second style in the first split-screen interface; and
if the operation end point of the movement operation is located in the second sub-region, controlling the virtual keyboard to be displayed in the second style in the second split-screen interface.

In some embodiments of the present disclosure, the display style change operation includes a sliding operation for the virtual keyboard, and the method further includes:
if the terminal is in the split-screen display mode and the display style of the currently displayed virtual keyboard is the second style, switching the virtual keyboard to be displayed in a split-screen interface pointed to by a sliding direction of the sliding operation in response to the sliding operation for the virtual keyboard.

In some embodiments of the present disclosure, the display style change operation is a touch operation for a preset key of the virtual keyboard;
in response to the display style change operation for the currently displayed virtual keyboard, determining the target style corresponding to the display style change operation includes:
in response to the touch operation, determining the second style as the target style if the terminal is in the split-screen display mode and the display style of the currently displayed virtual keyboard is the first style; wherein a display position of the virtual keyboard in the second style is determined by a historical display position where the terminal last displayed the virtual keyboard in the second style; or,
in response to the touch operation, determining the first style as the target style if the terminal is in the split-screen display mode and the display style of the currently displayed virtual keyboard is the second style.

In some embodiments of the present disclosure, the virtual keyboard includes: an input area and a function area; and
the input area includes a plurality of virtual keys, and the input area is configured to input a character associated with the virtual key when the virtual key is touched; and the function area is configured to display recommendation information adapted to a current application scenario of the terminal.

In some embodiments of the present disclosure, the terminal includes a first display screen and a second display screen, and the first display screen is foldable relative to the second display screen;
the method further includes:
in response to a folding operation for the first display screen and/or the second display screen, if the first display screen and the second display screen after folding are not parallel, displaying a current application interface of the terminal on the first display screen, and displaying the virtual keyboard on the second display screen.

In a second aspect of the present disclosure, there is provided a device for displaying a virtual keyboard, and the device includes:
a determination module, configured to, in response to a display style change operation for a currently displayed virtual keyboard, determine a target style corresponding to the display style change operation, wherein the virtual keyboard currently displayed by a terminal and a virtual keyboard corresponding to the target style are different in at least one of: a keyboard type, a display area, or a display position; and
a control module, configured to control the virtual keyboard to be displayed in the target style.

In some embodiments of the present disclosure, the determination module is further configured to:
in response to the display style change operation, determine a second style as the target style if a display style of the currently displayed virtual keyboard is a first style; or
in response to the display style change operation, determine the first style as the target style if the display style of the currently displayed virtual keyboard is the second style;
wherein an area ratio between a first-style virtual keyboard and a display screen of the terminal is greater than an area ratio between a second-style virtual keyboard and the display screen.

In some embodiments of the present disclosure, the display style change operation includes a movement operation for the virtual keyboard;
the determination module is further configured to:
in response to the movement operation, determine the target style according to a position of an operation end point of the movement operation.

In some embodiments of the present disclosure, the determination module is further configured to:
if a display style of the currently displayed virtual keyboard is a first style, and the operation end point of the movement operation is located in a first region, determine a second style as the target style; or
if the display style of the currently displayed virtual keyboard is the second style, and the operation end point of the movement operation is located in a second region, determine the first style as the target style;
wherein the first region is located outside a display position of a virtual keyboard corresponding to the first style, and the second region is overlapped with the display position of the virtual keyboard corresponding to the first style.

In some embodiments of the present disclosure, if the terminal is in a split-screen display mode, the terminal includes a first split-screen interface and a second split-screen interface, the display position of the virtual keyboard corresponding to the first style is overlapped with a part of the first split-screen interface and a part of the second split-screen interface, and the first region includes a first sub-region located in the first split-screen interface and a second sub-region located in the second split-screen interface;
the control module is further configured to:
if the operation end point of the movement operation is located in the first sub-region, control the virtual keyboard to be displayed in the second style in the first split-screen interface; and
if the operation end point of the movement operation is located in the second sub-region, control the virtual keyboard to be displayed in the second style in the second split-screen interface.

In some embodiments of the present disclosure, the display style change operation includes a sliding operation for the virtual keyboard, and the determination module is further configured to:
if the terminal is in a split-screen display mode and a display style of the currently displayed virtual keyboard is a second style, switch the virtual keyboard to be displayed in a split-screen interface pointed to by a sliding direction of the sliding operation in response to the sliding operation for the virtual keyboard.

In some embodiments of the present disclosure, the display style change operation is a touch operation for a preset key of the virtual keyboard;
the determination module is further configured to:
in response to the touch operation, determine a second style as the target style if the terminal is in a split-screen display mode and a display style of the currently displayed virtual keyboard is a first style, wherein a display position of the virtual keyboard in the second style is determined by a historical display position where the virtual keyboard in the second style was last displayed by the terminal; or
in response to the touch operation, determine the first style as the target style if the terminal is in the split-screen display mode and the display style of the currently displayed virtual keyboard is the second style.

In some embodiments of the present disclosure, the virtual keyboard includes: an input area and a function area; and
the input area includes a plurality of virtual keys, and the input area is configured to input a character associated with the virtual key when the virtual key is touched, and the function area is configured to display recommendation information adapted to a current application scenario of the terminal.

In some embodiments of the present disclosure, the terminal includes a first display screen and a second display screen, and the first display screen is foldable relative to the second display screen;
the determination module is further configured to:
in response to a folding operation for the first display screen and/or the second display screen, if the first display screen and the second display screen after folding are not parallel, display a current application interface of the terminal on the first display screen, and display the virtual keyboard on the second display screen.

In a third aspect of the present disclosure, there is provided a terminal, including:
a memory configured to store processor-executable instructions; and
a processor connected to the memory;
wherein the processor is configured to execute the method for displaying the virtual keyboard as described in any one of embodiments of the first aspect of the present disclosure.

In a fourth aspect of the present disclosure, there is provided a non-transitory computer-readable storage medium. Instructions in the storage medium, when executed by a processor of a terminal, enable the terminal to execute the method for displaying the virtual keyboard as described in any one of embodiments of the first aspect of the present disclosure.

The technical solutions provided by the embodiments of the present disclosure may have the following beneficial effects:
In the embodiments of the present disclosure, the terminal can determine the target style corresponding to the display style change operation by responding to the display style change operation for the currently displayed virtual keyboard, and control the virtual keyboard to be displayed in the target style. In this process, the terminal can change the keyboard type, the display area and/or the display position of the virtual keyboard, improving the display flexibility of the virtual keyboard, so as to meet needs of users, and improve the users' usage experience.

It should be noted that the above general description and the following detailed description are merely exemplary and explanatory and should not be construed as limiting of the disclosure.

### BRIEF DESCRIPTION OF THE DRAWINGS

The accompanying drawings here, which are incorporated in and constitute a part of this specification, illustrate embodiments consistent with the present disclosure and, together with the description, serve to explain principles of the present disclosure.
FIG. 1 shows a first schematic diagram of a display layout of a virtual keyboard according to the related art.
FIG. 2 shows a second schematic diagram of a display layout of a virtual keyboard according to the related art.
FIG. 3 shows a third schematic diagram of a display layout of a virtual keyboard according to the related art.
FIG. 4 shows a schematic diagram of a user using a terminal according to the related art.
FIG. 5 shows a fourth schematic diagram of a display layout of a virtual keyboard according to the related art.
FIG. 6 shows a schematic diagram of a display interface of a terminal according to the related art.
FIG. 7 shows a fifth schematic diagram of a display layout of a virtual keyboard according to the related art.
FIG. 8 shows a schematic flowchart of a method for displaying a virtual keyboard according to an embodiment of the present disclosure.
FIG. 9 shows a first schematic diagram of a display style of a virtual keyboard according to an embodiment of the present disclosure.
FIG. 10 shows a second schematic diagram of a display style of a virtual keyboard according to an embodiment of the present disclosure.
FIG. 11 shows a third schematic diagram of a display style of a virtual keyboard according to an embodiment of the present disclosure.
FIG. 12 shows a fourth schematic diagram of a display style of a virtual keyboard according to an embodiment of the present disclosure.
FIG. 13 shows a fifth schematic diagram of a display style of a virtual keyboard according to an embodiment of the present disclosure.
FIG. 14 shows a sixth schematic diagram of a display style of a virtual keyboard according to an embodiment of the present disclosure.
FIG. 15 shows a seventh schematic diagram of a display style of a virtual keyboard according to an embodiment of the present disclosure.
FIG. 16 shows an eighth schematic diagram of a display style of a virtual keyboard according to an embodiment of the present disclosure.
FIG. 17 shows a schematic diagram of a usage style of a terminal according to an embodiment of the present disclosure.
FIG. 18 shows a ninth schematic diagram of a display style of a virtual keyboard according to an embodiment of the present disclosure.
FIG. 19 shows a tenth schematic diagram of a display style of a virtual keyboard according to an embodiment of the present disclosure.
FIG. 20 shows a schematic structural diagram of a device for displaying a virtual keyboard according to an embodiment of the present disclosure.
FIG. 21 shows a block diagram of a terminal according to an embodiment of the present disclosure.

### DETAILED DESCRIPTION

Reference will be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present disclosure. Instead, they are merely examples of devices consistent with some aspects related to the present disclosure as recited in the appended claims.

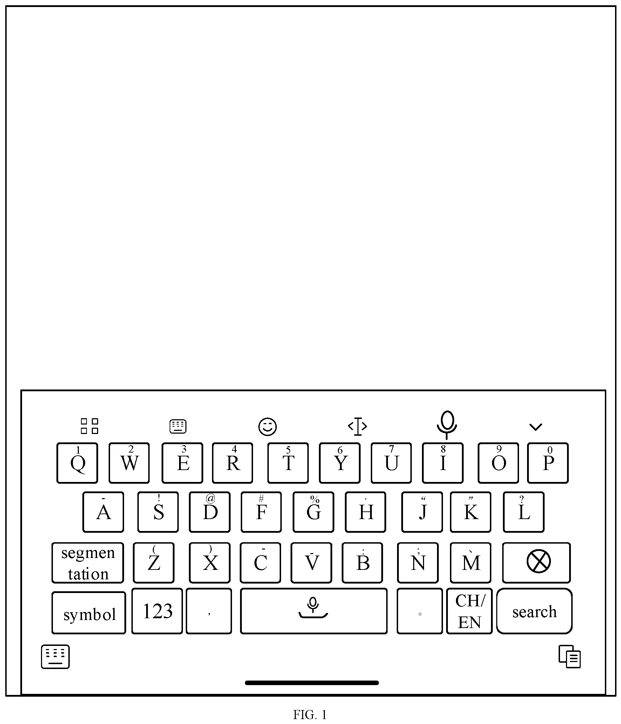

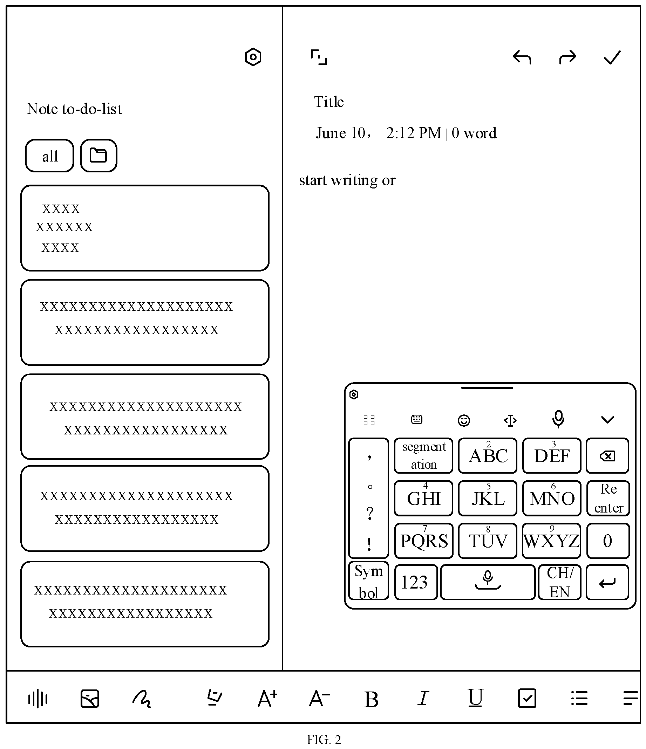

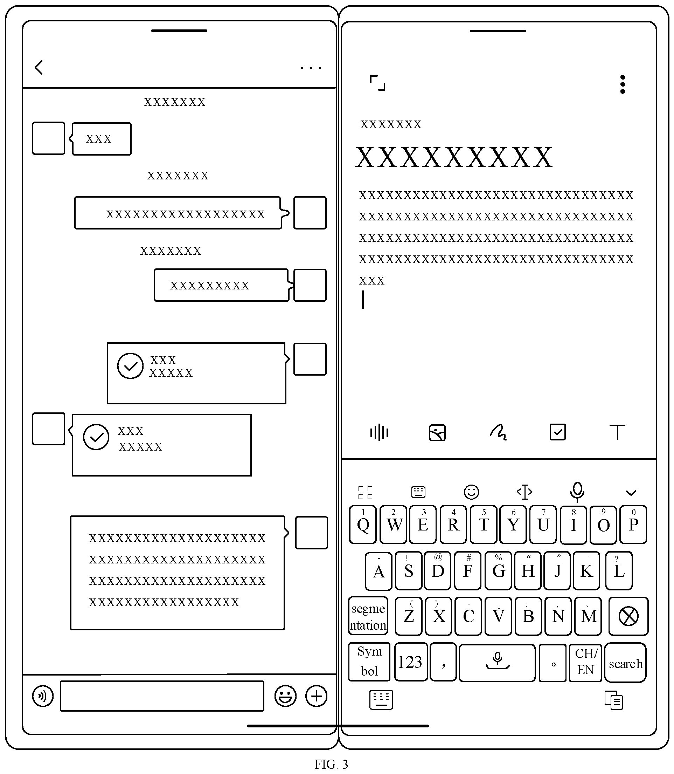

FIG. 1 shows a first schematic diagram of a display layout of a virtual keyboard according to the related art, FIG. 2 shows a second schematic diagram of a display layout of a virtual keyboard according to the related art, and FIG. 3 shows a third schematic diagram of a display layout of a virtual keyboard according to the related art. As shown in FIGS. 1 to 3, in the related arts, when a terminal is in a full-screen display mode, the terminal may display a full-screen keyboard or a floating keyboard, and when the terminal is in a split-screen display mode, the terminal may only display a split-screen keyboard.

A display style of the virtual keyboard is associated with a display mode of a display interface of the terminal, which causes inconvenience to the user

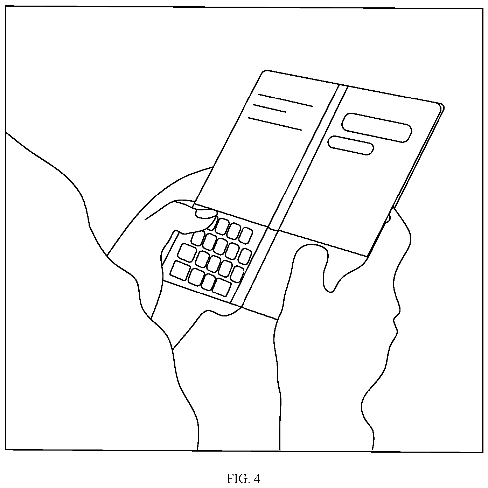

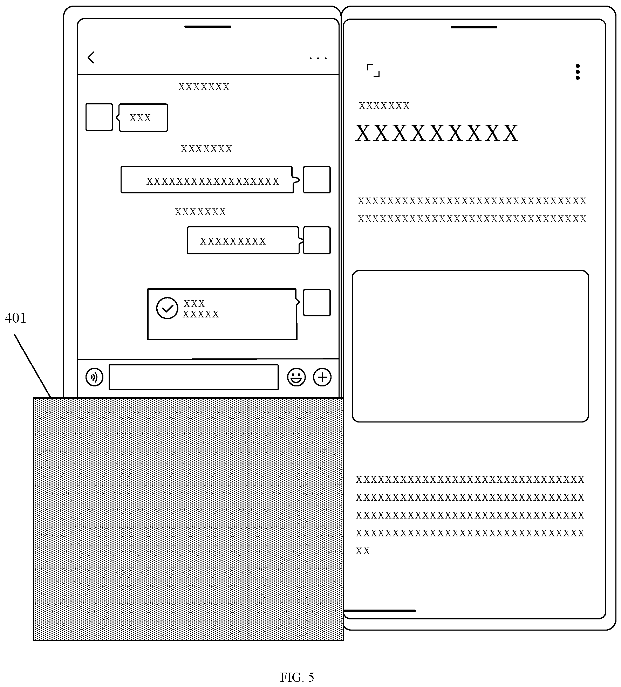

For example, FIG. 4 shows a schematic diagram of a user using a terminal according to the related art, and FIG. 5 shows a fourth schematic diagram of a display layout of a virtual keyboard according to the related art. As shown in FIGS. 4 to 5, it is assumed that the user holds the terminal with both hands as shown in FIG. 4, and the display interface of the terminal displays an image as shown in FIG. 5, so that the split-screen keyboard is located at the lower left half 401 of the display screen. When the user needs to use the right hand to input, the right hand is far away from the split-screen keyboard, resulting in an inconvenient input experience for the user, which affects the user's use.

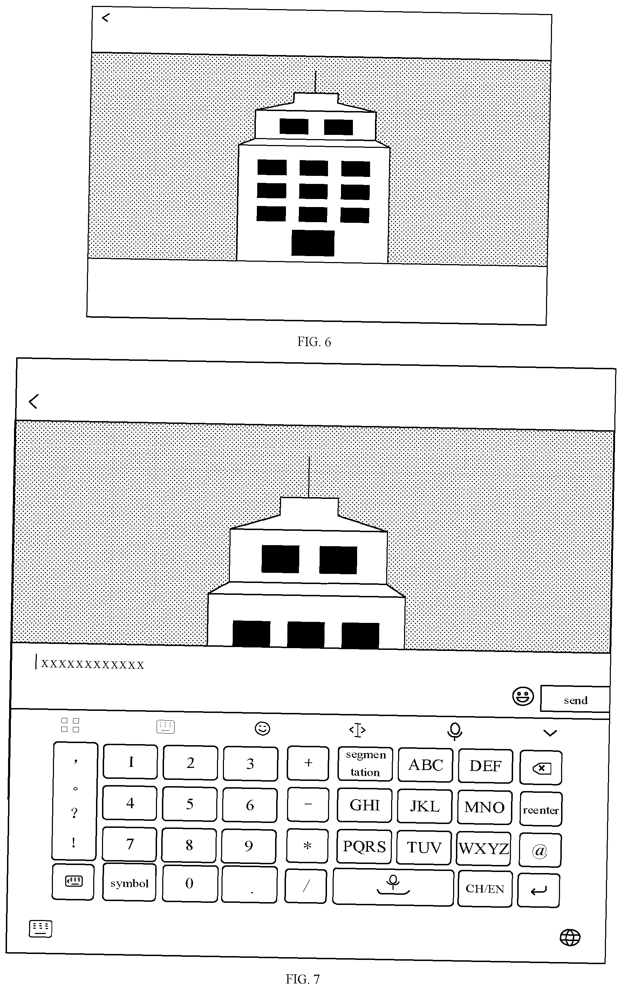

For example, FIG. 6 shows a schematic diagram of a display interface of a terminal according to the related art, and FIG. 7 shows a fifth schematic diagram of a display layout of a virtual keyboard according to the related art.

As shown in FIGS. 6 and 7, it is assumed that the user uses the full-screen display mode shown in FIG. 6 to play a video, and in this case, the user calls the virtual keyboard, and the full-screen keyboard will be displayed in the position shown in FIG. 7, that is, the full-screen keyboard will be displayed above the playing video, thereby affecting the user's usage experience.

It can be seen that there exists a phenomenon in the method for displaying the virtual keyboard in the related art that it is inconvenient for the user to input and the user's usage experience is affected.

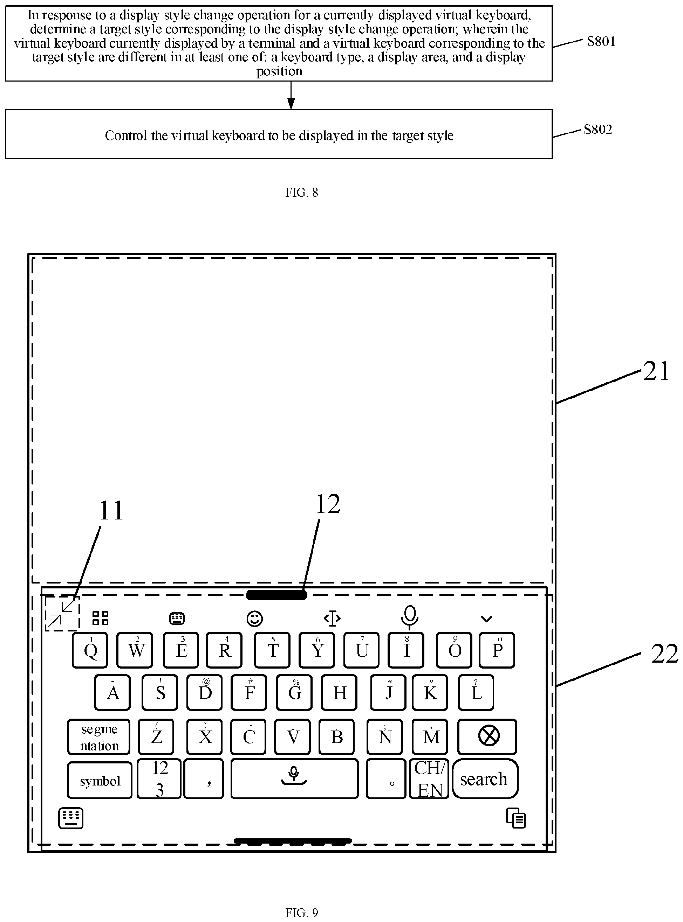

The present disclosure provides a method for displaying a virtual keyboard. FIG. 8 shows a schematic flowchart of a method for displaying a virtual keyboard according to an embodiment of the present disclosure. As shown in FIG. 8, the method includes:
in a step S801, in response to a display style change operation for a currently displayed virtual keyboard, a target style corresponding to the display style change operation is determined, and the virtual keyboard currently displayed by a terminal and a virtual keyboard corresponding to the target style are different in at least one of: a keyboard type, a display area, or a display position; and
in a step S802, the virtual keyboard is controlled to be displayed in the target style.

In embodiments of the present disclosure, the method is applied for the terminal, including a full-screen terminal, a foldable screen terminal, etc. The display style change operation includes an operation such as clicking, sliding, or pressing performed by the user on the display screen of the terminal.

When the terminal detects the display style change operation for the currently displayed virtual keyboard, it may respond to the display style change operation and determine the target style corresponding to the display style change operation based on a characteristic of the display style change operation such as a type, a trajectory, and a direction of the display style change operation.

The virtual keyboard currently displayed by the terminal and the virtual keyboard corresponding to the target style are different in at least one of the keyboard type, the display area or the display position.

The different keyboard types may refer to different layouts, patterns, and other characteristics of the virtual keyboard. For example, the display styles of the virtual keyboard may be divided into a full-screen style, a split-screen style, a floating style, and the like based on the keyboard type.

The different display areas may refer to different area ratios between the virtual keyboard and the display screen of the terminal. For example, the display styles of the virtual keyboard may be divided into a large-screen keyboard (which may be in the full-screen style) and a small-screen keyboard (which may be in the split-screen style) based on the display area.

The different display positions may mean that the virtual keyboard may be displayed at a plurality of different positions in the display screen.

The virtual keyboard in the full-screen style is displayed at the bottom of the display screen. It can be understood that the virtual keyboard in the full-screen style is the full-screen keyboard. The virtual keyboard in the split-screen style is displayed at the bottom of the display screen after the terminal enables the split-screen mode. It can be understood that the virtual keyboard in the split-screen style is the split-screen keyboard. The virtual keyboard in the floating style is displayed in a region other than the bottom of the display screen. It can be understood that the virtual keyboard in the floating style is the floating keyboard.

In some embodiments, after responding to the display style change operation, the terminal may determine the display mode of the current display interface of the terminal and the current display style of the virtual keyboard, and determine the target style based on the current display style.

The display mode of the display interface may include the full-screen display mode, the split-screen display mode and/or a single-screen display mode, etc.

When the terminal is in the full-screen display mode, the display screen may display one operation interface; when the terminal is in the split-screen display mode, the display screen can display different operation interfaces; and when the terminal is in the single-screen display mode, one of the plurality of display screens displays the operation interface alone.

Here, the current display style may be any style that can be implemented by the virtual keyboard, such as the full-screen style, the split-screen style, the floating style, and the like.

The method for determining the display mode of the current display interface of the terminal and a first style currently displayed by the virtual keyboard can be selected according to actual needs, which is not specifically limited by embodiments of the present disclosure.

For example, the display mode of the current display interface of the terminal may be determined based on a display identity of the current display interface.

For example, the current display style of the virtual keyboard may be determined based on the current display position and/or the current display type of the virtual keyboard. The current display style of the virtual keyboard may also be determined based on identification information of the virtual keyboard.

Determining the target style based on the current display style may include: determining, according to an operation type of the display style change operation, the target style from a plurality of display styles corresponding to the display mode.

Here, there is a definitive correspondence between the operation type of the display style change operation and the target style. The operation type may be divided into clicking a control icon, sliding the control icon, pressing the screen, etc., which is not specifically limited in embodiments of the present disclosure.

In an embodiment, the plurality of display styles corresponding to the different display modes may be different.

For example, the full-screen display mode may correspond to the full-screen style and the split-screen style, and the split-screen display mode may correspond to the split-screen style and the floating style.

It should be noted that a width corresponding to the split-screen style is determined based on a width of the screen. Therefore, in the full-screen display mode, the split-screen style may be considered to be the same as the full-screen style.

In some embodiments, the terminal may also determine the target style corresponding to the display style change operation according to an operation trajectory of the display style change operation.

Here, there is a definitive correspondence between the operation trajectory of the display style change operation and the target style. The operation trajectory may be divided into an operation direction, an operation starting point, an operation end point, an operation speed, etc., which are not specifically limited in embodiments of the present disclosure.

In the step S802, after determining the target style, the terminal may control the virtual keyboard to be displayed in the target style.

In embodiments of the present disclosure, the terminal can determine the target style corresponding to the display style change operation by responding to the display style change operation for the currently displayed virtual keyboard, and control the virtual keyboard to be displayed in the target style. In this process, the terminal can change the keyboard type, the display area and/or the display position of the virtual keyboard, improving the display flexibility of the virtual keyboard, so as to meet needs of users, and improve the users' usage experience.

In some embodiments of the present disclosure, in the step S801, in response to the display style change operation for the currently displayed virtual keyboard, determining the target style corresponding to the display style change operation may include:
in response to the display style change operation, determining a second style as the target style if a display style of the currently displayed virtual keyboard is a first style; or
in response to the display style change operation, determining the first style as the target style if the display style of the currently displayed virtual keyboard is the second style;
an area ratio between the virtual keyboard in the first style and the display screen of the terminal is greater than an area ratio between the virtual keyboard in the second style and the display screen.

In an embodiment of the present disclosure, in response to the display style change operation for the currently displayed virtual keyboard, the terminal may determine that the second style is the target style if the display style of the currently displayed virtual keyboard is the first style.

The area ratio between the virtual keyboard in the first style and the display screen of the terminal is a first value, the area ratio between the virtual keyboard in the second style and the display screen of the terminal is a second value, and the first value is greater than the second value.

It can be understood that the terminal determines the second style as the target style when the virtual keyboard in the first style is currently displayed, which achieves a display area reduction processing for the currently displayed virtual keyboard, that is, achieves the switching from the large-screen keyboard to the small-screen keyboard. In this way, in a case where the virtual keyboard may block a display application interface, the blockage of the display application interface by the virtual keyboard can be effectively reduced, thereby improving the user's usage experience.

Similarly, in response to the display style change operation for the currently displayed virtual keyboard, the terminal may determine that the first style is the target style if the display style of the currently displayed virtual keyboard is the second style.

The area ratio between the virtual keyboard in the second style and the display screen of the terminal is the second value, the area ratio between the virtual keyboard in the first style and the display screen of the terminal is the first value, and the first value is greater than the second value.

It can be understood that the terminal determines the first style as the target style when the virtual keyboard in the second style is currently displayed, which achieves a display area increase processing for the currently displayed virtual keyboard, that is, achieves the switching from the small-screen keyboard to the large-screen keyboard, thereby increasing a size of a virtual key in the virtual keyboard. In a case where the user needs to touch the virtual key to input the information, false touches caused by too small virtual keys are effectively reduced, which enhances the operation convenience and improves the user's usage experience.

In some embodiments, the first-style virtual keyboard may be in the full-screen style, and the second-style virtual keyboard may be in the split-screen style or floating style. Alternatively, the first-style and second-style virtual keyboards may also be in other styles, as long as the area ratio between the first-style virtual keyboard and the display screen of the terminal is greater than the area ratio between the second-style virtual keyboard and the display screen, which is not specifically limited by embodiments of the present disclosure.

In some embodiments, when the first-style or the second-style virtual keyboard has a plurality of keyboard types, different keyboard types may correspond to different display weights. According to the display weights, the target style in the process of switching the display style is determined.

For example, the full-screen style may be set to have a first display weight, the split-screen style may be set to have a second display weight, and the floating style may be set to have a third display weight. The first display weight is greater than the second display weight, and the second display weight is greater than the third display weight, so that when the second style includes the split-screen style and the floating style, the split-screen style may be preferentially determined as the target style.

In an embodiment of the present disclosure, an area ratio between the display screen and the virtual keyboard in the target style determined by the terminal in response to the display style change operation for the currently displayed virtual keyboard may be larger or smaller than the area ratio between the currently displayed virtual keyboard and the display screen, thereby satisfying the user's demand for scaling the virtual keyboard and effectively improving the user's usage experience.

In some embodiments of the present disclosure, the display style change operation includes a movement operation for the virtual keyboard; and
in the step S801, in response to the display style change operation for the currently displayed virtual keyboard, determining the target style corresponding to the display style change operation includes:
in response to the movement operation, determining the target style according to a position of an operation end point of the movement operation.

In an embodiment of the present disclosure, when the terminal determines that the display style change operation is the movement operation for the virtual keyboard, the terminal may determine the target style according to the position of the operation end point of the movement operation.

The movement operation is an operation of moving the currently displayed virtual keyboard from the current display region to a new display region.

Here, the terminal may determine whether the user triggers the movement operation for the virtual keyboard according to the user's operation trajectory, direction, etc., which is not specifically limited by embodiments of the present disclosure.

In an embodiment, when the touch control of the terminal by the user is a preset gesture action, the terminal may determine that the display style change operation triggered by the user is the movement operation.

For example, the preset gesture action may be that the user controls the movement of a finger on the display screen after double-clicking the virtual keyboard; or, the preset gesture action may be that the user double-clicks twice in a region where the virtual keyboard is not displayed after clicking the virtual keyboard; or, the preset gesture action may also be other actions, which are not specifically limited in embodiments of the present disclosure.

When determining that the display style change operation is the movement operation, the terminal may obtain the position of the operation end point corresponding to the movement operation, and determine the target style according to the position of the operation end point of the movement operation.

In an embodiment, the end point of the movement operation may be a position where the display screen was touched last time in the preset gesture action.

In some embodiments, determining the target style according to the position of the operation end point of the move operation includes: determining whether the position of the operation end point of the movement operation and the current display position of the virtual keyboard belong to the same display region; if they are in the same display region, determining that the virtual keyboard corresponding to the target style is the same as the currently displayed virtual keyboard in the keyboard type but different in the display position.

The display region may be divided according to actual needs, which is not specifically limited in embodiments of the present disclosure.

For example, the display region in the display screen may be divided into a floating keyboard display region, a full-screen keyboard display region, a split-screen keyboard display region, etc. If the terminal is a foldable screen mobile phone, the display region of the display screen may also be divided into a first display screen region and a second display screen region.

It can be understood that in this embodiment, when the position of the operation end point and the current display position belong to the same display region, a displacement corresponding to the movement operation may be small. In this case, only the position of the virtual keyboard can be moved without changing the type and area of the virtual keyboard, meeting the user's need to fine-tune the position of the virtual keyboard.

In some embodiments, if the position of the operation end point of the movement operation and the current display position of the virtual keyboard do not belong to the same display region, the target style is determined according to a preset style of a display region corresponding to the position of the operation end point. The virtual keyboard corresponding to the target style is different from the currently displayed virtual keyboard in at least the keyboard type or the display area.

The preset styles corresponding to different display regions may be different.

For example, a preset style corresponding to a display region of the floating keyboard may be a floating style, and a preset style corresponding to a display region of the split-screen keyboard may be a split-screen style. When the current virtual keyboard is in the floating style and displayed in the floating keyboard region, and the position of the end point of the movement operation is the display region of the split-screen keyboard, the target style may be the split-screen style.

It can be understood that in this embodiment, when the position of the operation end point and the current display position belong to different display regions, the target style different from the currently displayed keyboard type or display area is determined according to the position of the operation end point of the movement operation to meet the user's need to switch the keyboard style.

In an embodiment of the present disclosure, the terminal may respond to the movement operation for the virtual keyboard and determine the target style according to the position of the end point of the movement operation, so that the terminal meets different needs of the user, improving the user's usage experience.

In some embodiments of the present disclosure, determining the target style according to the position of the operation end point of the move operation includes:
if the display style of the currently displayed virtual keyboard is the first style, and the operation end point of the movement operation is located in a first region, determining the second style as the target style; or
if the display style of the currently displayed virtual keyboard is the second style, and the operation end point of the movement operation is located in a second region, determining the first style as the target style;
the first region is located outside a display position of the virtual keyboard corresponding to the first style, and the second region is overlapped with the display position of the virtual keyboard corresponding to the first style.

In an embodiment of the present disclosure, the terminal may determine the display style of the currently displayed virtual keyboard.

It can be understood that the terminal determines the display style of the currently displayed virtual keyboard, and can at least determine the keyboard type, the display area and the display position of the currently displayed virtual keyboard.

If the display style of the currently displayed virtual keyboard is the first style, that is, an area ratio between the currently displayed virtual keyboard and the display screen is relatively large, and the operation end point of the movement operation is located in the first region, the second style may be determined as the target style.

The area ratio between the second-style virtual keyboard and the display screen is smaller than the area ratio between the first-style virtual keyboard and the display screen of the terminal.

It can be understood that when it is satisfied that the first style that occupies a larger area of the display screen is currently displayed, and the operation end point of the movement operation is located in the first region, the terminal may determine the second style that occupies a smaller area of the display screen as the target style, thereby reducing the proportion of the virtual keyboard on the display screen, effectively reducing the blockage of the display application interface by the virtual keyboard, and facilitating the user to obtain the display application interface.

It should be noted that the first region is located outside the display position of the virtual keyboard corresponding to the first style.

For example, FIG. 9 shows a first schematic diagram of a display style of a virtual keyboard according to an embodiment of the present disclosure. As shown in FIG. 9, when the terminal is in the full-screen display mode, the terminal currently displays the virtual keyboard in the full-screen style (the first style), and the operation end point of the movement operation is located in the first region 21, the floating style (the second style) of the virtual keyboard may be determined as the target style. The first region 21 is located outside the display position 22 of the virtual keyboard corresponding to the full-screen style.

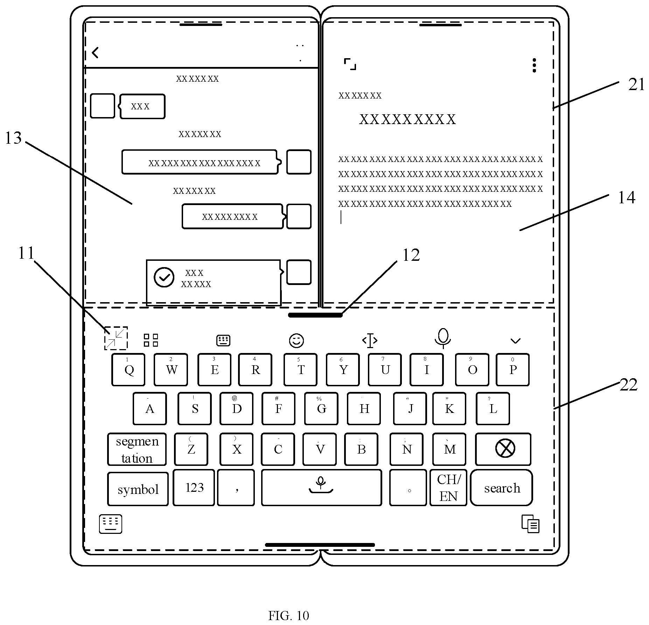

For example, FIG. 10 shows a second schematic diagram of a display style of a virtual keyboard according to an embodiment of the present disclosure. As shown in FIG. 10, the terminal is in the split-screen display mode, the terminal includes a first split-screen interface 13 and a second split-screen interface 14, and the first region 21 may be located in the first split-screen interface 13 and the second split-screen interface 14 outside the display position 22 of the virtual keyboard corresponding to the full-screen style.

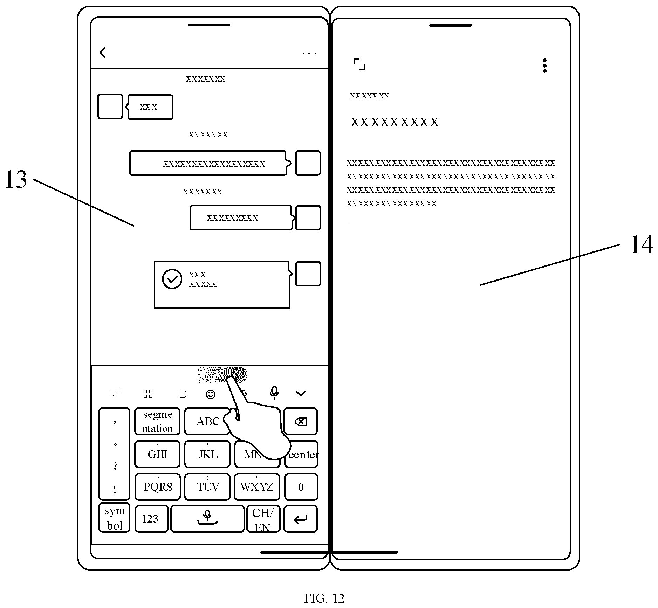

In an embodiment, the virtual keyboard is provided with a movement control button (i.e., a second control key, such as a second control key 12 in FIGS. 12 to 13). When the user touches the movement control button and moves the virtual keyboard to the first region, the user completes the movement operation for the virtual keyboard, and the full-screen style virtual keyboard may be switched to a floating style virtual keyboard.

If the display style of the currently displayed virtual keyboard is the second style, that is, the area ratio between the currently displayed virtual keyboard and the display screen is relatively small, and the operation end point of the movement operation is located in the second region, the first style may be determined as the target style.

It can be understood that when it is satisfied that the second style that occupies a smaller area of the display screen is currently displayed and the operation end point of the movement operation is located in the second region, the terminal may determine the first style that occupies a larger area of the display screen as the target style, thereby increasing the proportion of the virtual keyboard on the display screen, and facilitating the user to use the virtual keyboard to input the information.

It should be noted that the second region overlaps with the display position of the virtual keyboard corresponding to the first style.

For example, as shown in FIGS. 9 to 10, when the terminal is in the full-screen display mode or in the split-screen display mode, the second region 22 may overlap with the display position of the virtual keyboard in the full-screen style (the first style).

In some embodiments, the terminal may determine the display style of the currently displayed virtual keyboard according to the current display mode.

For example, when the terminal is in the full-screen display mode, a default display style corresponding to the full-screen display mode is the first style, and the first style is determined as the display style of the currently displayed virtual keyboard; and when the terminal is in the split-screen display mode, the default display style corresponding to the split-screen display mode is the second style, and the second style is determined as the display style of the currently displayed virtual keyboard.

In some embodiments, before the terminal determines the display style of the currently displayed virtual keyboard according to the current display mode, it also needs to obtain whether the user has triggered the display style change operation for the virtual keyboard. If the user has triggered the display style change operation, the display style of the currently displayed virtual keyboard is determined based on the default display style and the display style change operation before the current moment.

In some embodiments, the first style of the virtual keyboard may be the split-screen style, and the second style of the virtual keyboard may be the floating style. If the display style of the currently displayed virtual keyboard is the split-screen style, and the operation end point of the movement operation is located in the first region, the floating style is determined as the target style. Alternatively, if the display style of the currently displayed virtual keyboard is the floating style, and the operation end point of the movement operation is located in the second region, the split-screen style is determined to be the target style.

The display position of the split-screen style may be the bottom of the first split-screen interface or the second split-screen interface. The second region coincides with the display position of the virtual keyboard corresponding to the first style, and the first region is a region except the bottom of the first split-screen interface or the second split-screen interface.

In an embodiment of the present disclosure, the terminal can complete the switching of the virtual keyboard between different display areas, so that the display style of the virtual keyboard meets the usage requirements of the user

In some embodiments of the present disclosure, if the terminal is in the split-screen display mode, the terminal includes the first split-screen interface and the second split-screen interface, the display position of the virtual keyboard corresponding to the first style overlaps with a part of the first split-screen interface and a part of the second split-screen interface, and the first region includes a first sub-region located in the first split-screen interface and a second sub-region located in the second split-screen interface; and
controlling the virtual keyboard to be displayed in the target style includes:
if the operation end point of the movement operation is located in the first sub-region, controlling the virtual keyboard to be displayed in the second style in the first split-screen interface; and
if the operation end point of the movement operation is located in the second sub-region, controlling the virtual keyboard to be displayed in the second style in the second split-screen interface.

In an embodiment of the present disclosure, if the terminal is in the split-screen display mode, that is, the terminal includes the first split-screen interface and the second split-screen interface, the display position of the virtual keyboard corresponding to the first style coincides with the part of the first split-screen interface and the part of the second split-screen interface.

Here, when a width of the first split-screen interface is greater than a width of the second split-screen interface, the display position of the virtual keyboard corresponding to the first style may mainly overlap with the part of the first split-screen interface. When the width of the first split-screen interface is smaller than the width of the second split-screen interface, the display position of the virtual keyboard corresponding to the first style may mainly overlap with the part of the second split-screen interface.

It can be understood that the virtual keyboard corresponding to the first style overlapping with the part of the first split-screen interface and the part of the second split-screen interface can realize that the first split-screen interface and the second split-screen interface jointly display the virtual keyboard corresponding to the first style.

It should be noted that the display position of the virtual keyboard corresponding to the first style overlaps with the part of the first split-screen interface and the part of the second split-screen interface. It can be understood that the display position of the first-style virtual keyboard at least partially overlaps with the first split-screen interface, and the display position of the first-style virtual keyboard also at least partially overlaps with the second split-screen interface.

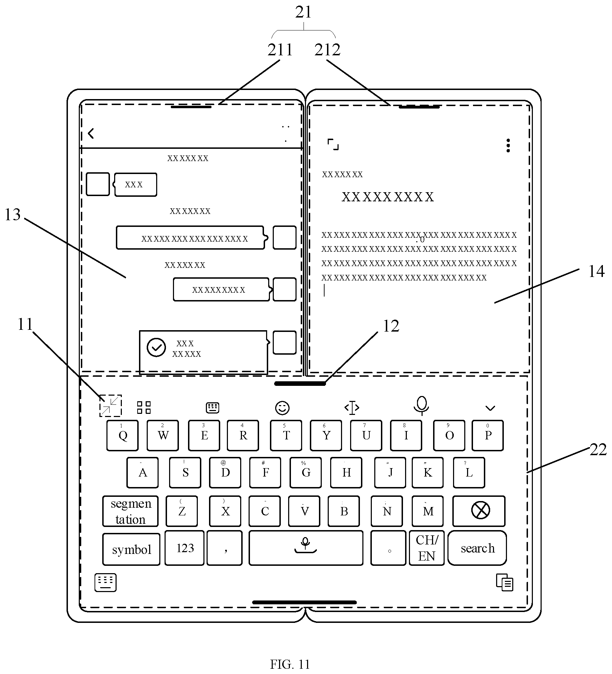

For example, FIG. 11 shows a third schematic diagram of a display style of a virtual keyboard according to an embodiment of the present disclosure. As shown in FIGS. 10 to 11, the virtual keyboard corresponding to the first style overlaps with the second region 22, and when the terminal is in the split-screen display mode, the second region 22 may overlap with the bottom of the first split-screen interface 13 and the bottom of the second split-screen interface 14, so that the virtual keyboard corresponding to the first style overlaps with the part of the first split-screen interface 13 and the part of the second split-screen interface 14.

The first region is a region outside the display position of the first-style virtual keyboard, and the first region includes a first sub-region and a second sub-region. The first sub-region may be located in the first split-screen interface, and the second sub-region may be located in the second split-screen interface.

For example, as shown in FIG. 11, the first region 21 includes a first sub-region 211 located in the first split-screen interface 13 and a second sub-region 212 located in the second split-screen interface 14. The first sub-region 13 may be located at the top of the first split-screen interface 13 of the terminal, and the second sub-region 14 may be located at the top of the second split-screen interface 14.

If the operation end point of the movement operation is located in the first sub-region, the virtual keyboard may be controlled to be displayed in the second style in the first split-screen interface.

It can be understood that when the terminal determines that the operation end point is located in the first region, it can determine the second style as the target style, and then display the second style; and in addition, the terminal may determine that the operation end point is located in the first sub-region, so as to control the virtual keyboard to be displayed in the second style in the first split-screen interface.

Here, the display position and the display type of the second-style virtual keyboard in the first split-screen interface are not specifically limited.

For example, when the split-screen style and the floating style are both the second style, the split-screen style may be displayed at the bottom of the first split-screen interface; or, the floating style may be displayed in the middle of the first split-screen interface.

Similarly, if the operation end point of the movement operation is located in the second sub-region, the virtual keyboard may be controlled to be displayed in the second style in the second split-screen interface.

In an embodiment of the present disclosure, the terminal can control the virtual keyboard to be displayed in the first split-screen interface or in the second split-screen interface by determining the relationship between the operation end point and the first sub-region and the second sub-region, thereby ensuring that the virtual keyboard only occupies the display position in one split-screen interface without affecting the display application interface in the other split-screen interface, thereby meeting the diverse needs of the user.

In some embodiments of the present disclosure, the display style change operation includes a sliding operation for the virtual keyboard, and the method further includes:
if the terminal is in the split-screen display mode and the display style of the currently displayed virtual keyboard is the second style, switching the virtual keyboard to be displayed in a split-screen interface pointed to by a sliding direction of the sliding operation in response to the sliding operation for the virtual keyboard.

In an embodiment of the present disclosure, when the terminal determines that the display style change operation is the sliding operation for the virtual keyboard, the terminal may determine the target style according to the sliding direction of the sliding operation.

The sliding operation is effective when the terminal is in the split-screen display mode. The sliding operation is an operation to slide the currently displayed virtual keyboard from the split-screen interface where it is currently located to the split-screen interface pointed to by the sliding direction.

Here, the terminal may determine whether the user triggers the sliding operation for the virtual keyboard based on the user's operation trajectory, operation direction, and the user's touch operation on a function key, etc., which is not specifically limited in embodiments of the present disclosure.

In an embodiment, when the user completes the sliding operation in one split-screen interface, the terminal may determine that the display style change operation triggered by the user is the sliding operation.

If the terminal is in the split-screen display mode and the display style of the currently displayed virtual keyboard is the second style, in response to the sliding operation, the terminal may switch the virtual keyboard to be displayed in the split-screen interface pointed to by the sliding direction of the sliding operation.

A display area of the virtual keyboard corresponding to the second style is relatively small, so that the second style can be displayed in the first split-screen interface or the second split-screen interface.

If a dragging direction of the sliding operation is towards the first split-screen interface, it is determined to display the second style in the first split-screen interface. If the dragging direction of the sliding operation is towards the second split-screen interface, it is determined to display the second style in the second split-screen interface.

It should be noted that no matter whether the second style of the virtual keyboard is the floating style or the split-screen style, if the sliding direction of the sliding operation is towards the first split-screen interface, it can be determined that the floating style or the split-screen style is displayed in the first split-screen interface.

For example, if the display style of the currently displayed virtual keyboard is to display the split-screen keyboard in the first split-screen interface, when the dragging direction of the sliding operation is towards the second split-screen interface, it is determined to display the split-screen keyboard in the second split-screen interface.

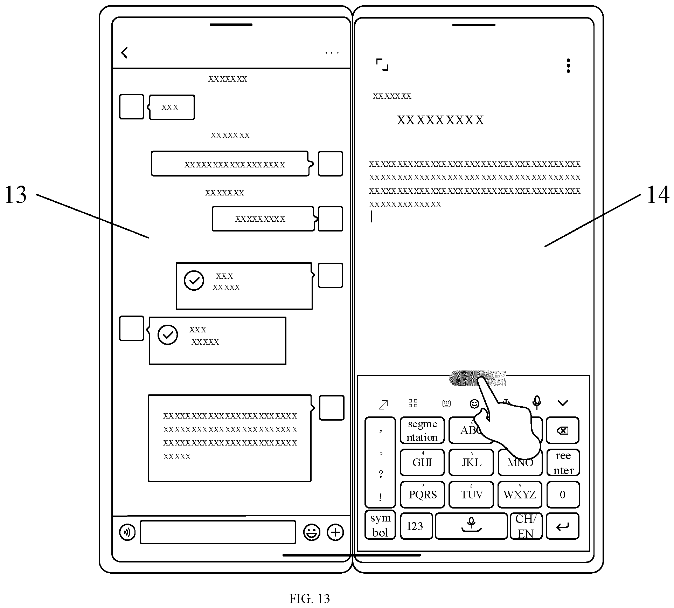

For example, FIG. 12 shows a fourth schematic diagram of a display style of a virtual keyboard according to an embodiment of the present disclosure, and FIG. 13 shows a fifth schematic diagram of a display style of a virtual keyboard according to an embodiment of the present disclosure. As shown in FIGS. 12 to 13, the terminal has the first split-screen interface 13 and the second split-screen interface 14, and the first split-screen interface 13 may be located on the left side of the second split-screen interface 14.

The split-screen keyboard is displayed on the first split-screen interface 13 in FIG. 12. When the user triggers the sliding operation and slides towards the second split-screen interface 14, the virtual keyboard changes to be displayed in the second split-screen interface 14, and the split-screen keyboard as shown in FIG. 13 is obtained. Similarly, the split-screen keyboard is displayed on the second split-screen interface 14 in FIG. 13, and when the user triggers the sliding operation and slides towards the first split-screen interface 13, the virtual keyboard changes to be displayed in the first split-screen interface 13, and the split-screen keyboard as shown in FIG. 12 is obtained.

In an embodiment, the virtual keyboard is provided with a sliding control button (i.e., a second control key, such as a second control key 12 in FIGS. 12 to 13). When the user slides the sliding control button with the sliding direction towards the first split-screen interface, the virtual keyboard in the second style may be displayed in the first split-screen interface.

In an embodiment of the present disclosure, if the terminal is in the split-screen display mode, it is determined whether the sliding direction of the sliding operation is towards the first split-screen interface or the second split-screen interface, which may realize that the display position of the virtual keyboard is changed to the split-screen interface which the sliding direction is towards, thereby meeting the needs of the user.

In some embodiments of the present disclosure, the display style change operation is a touch operation for a preset key of the virtual keyboard;
in the step S801, in response to the display style change operation for the currently displayed virtual keyboard, determining the target style corresponding to the display style change operation further includes:
in response to the touch operation, determining the second style as the target style if the terminal is in the split-screen display mode and the display style of the currently displayed virtual keyboard is the first style, a display position of the virtual keyboard in the second style is determined by a historical display position where the terminal last displayed the virtual keyboard in the second style; or,
in response to the touch operation, determining the first style as the target style if the terminal is in the split-screen display mode and the display style of the currently displayed virtual keyboard is the second style.

In an embodiment of the present disclosure, the terminal may determine that the display style change operation is the touch operation for the preset key of the virtual keyboard.

The preset key may be arranged at any position in the virtual keyboard, which is not specifically limited in embodiments of the present disclosure.

In response to the touch operation, if the terminal is in the split-screen display mode and the display style of the currently displayed virtual keyboard is the first style, the second style is determined as the target style.

The display position of the second-style virtual keyboard is determined by the historical display position when the terminal last displayed the second-style virtual keyboard.

It can be understood that if the terminal is in the split-screen display mode and the display style of the currently displayed virtual keyboard is the first style, the terminal can determine the second style as the target style in response to the touch operation, and display the virtual keyboard corresponding to the second style at the historical display position where the second-style virtual keyboard was last displayed.

For example, when the terminal is in the split-screen display mode, the current display style of the virtual keyboard is the full-screen style (the first style). In this case, in response to the touch operation for the preset key, the full-screen style may be changed to the split-screen style and the floating style (the second style). Whether to change to the split-screen style or the floating style may be determined based on a history style (a historical second style) displayed last time before the virtual keyboard changes to the full-screen style.

When the last displayed historical style is the split-screen style, the split-screen style is redisplayed at the historical display position of the split-screen style virtual keyboard. When the last displayed historical style is the floating style, the floating style is redisplayed at the historical display position of the floating style virtual keyboard.

In response to the touch operation, if the terminal is in the split-screen display mode and the display style of the currently displayed virtual keyboard is the second style, the first style is determined as the target style.

It can be understood that when the terminal is in the split-screen display mode, and the current display style of the virtual keyboard is the split-screen style or the floating style (the second style), the split-screen style or the floating style may be changed to the full-screen style (the first style) in response to the touch operation for the preset key.

It should be noted that the touch operation in one or more of the above embodiments includes a clicking operation, a dragging operation, a sliding operation, etc. for the preset key, which is not specifically limited in embodiments of the present disclosure.

In an embodiment, the preset key may include a first control key and a second control key.

For example, as shown in FIGS. 9 to 13, virtual keyboards of different display styles may be provided with a first control key 11 and a second control key 12. The first control key 11 may be arranged at the upper left corner of the virtual keyboard, and the second control key 12 may be arranged at the upper part of the middle area of the virtual keyboard.

The first control key and the second control key may be controlled by different types of operations.

For example, the first control key may be controlled by the clicking operation, and according to the clicking operation for the first control key, the terminal may determine a target style corresponding to the clicking operation.

The second control key may be controlled by the dragging operation or the sliding operation, and according to the dragging operation or the sliding operation for the second control key, the terminal may determine the target style corresponding to the dragging operation or the sliding operation.

It should be noted that, for the step of determining the target style according to the dragging operation or the sliding operation for the second control key, reference may be made to the description in one or more embodiments corresponding to FIGS. 8 to 13, and for the sake of brevity of the specification, it will not be repeated here.

It should be noted that, for the step of determining the target style according to the clicking operation for the first control key, reference may be made to the description in one or more embodiments, and for the sake of brevity of the specification, it will not be repeated here.

In some embodiments, if the current display interface of the terminal is in the full-screen display mode and the first style is currently displayed, the second style is determined as the target style based on the clicking operation for the first control key. If the current display interface of the terminal is in the full-screen display mode and the second style is currently displayed, the first style is determined as the target style based on the clicking operation for the first control key.

It can be understood that when the terminal is in the full-screen display mode, clicking the first control key can trigger the terminal to complete the style change of the virtual keyboard from the first style to the second style, or from the second style to the first style, thereby switching the display style of the virtual keyboard.

In an embodiment of the present disclosure, when the terminal is in the split-screen display mode, the virtual keyboard can complete the change between the first style and the second style, thereby meeting the user's input needs.

In some embodiments of the present disclosure, the virtual keyboard includes: an input area and a function area; and
the input area includes a plurality of virtual keys, and the input area is configured to input a character associated with a virtual key when the virtual key is touched; and the function area is configured to display recommendation information adapted to a current application scenario of the terminal.

In an embodiment of the present disclosure, the virtual keyboard may include the input area and the function area.

The input area includes the plurality of virtual keys. The input area is configured to input the character associated with the virtual key when the virtual key is touched.

The plurality of virtual keys may be, for example, numeric keys with the associated characters including 1, 2, etc., and letter keys with the associated characters including A, B, etc.

The function area is configured to display the recommendation information adapted to the current application scenario of the terminal, so that the user can complete the quick input by relying on the function area.

In some embodiments, the function area may be displayed above the input area.

In some embodiments, the recommendation information includes: a text, an emoticon, a function, etc. The function includes: a voice-to-text function, a smart reply function, etc.

For example, Table 1 is an example of an input application scenario and the recommendation information.

| Input application scenario | Recommendation information |
|---|---|
| Video scenario | Barrage/ comment |
| Social scenario | Emoticon/common expression |
| Search scenario | Search hot word |

| Game scenario | Game expression |
|---|---|
| Office scenario | Voice-to-text function |

It should be noted that in the office scenario, the function area can provide the user with the voice-to-text function without the need for the user to click on the corresponding function entrance again, thereby greatly improving the input efficiency.

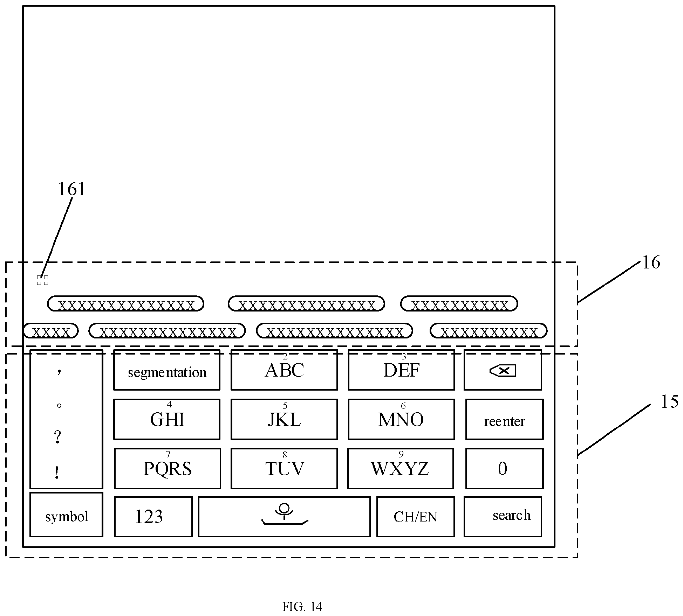

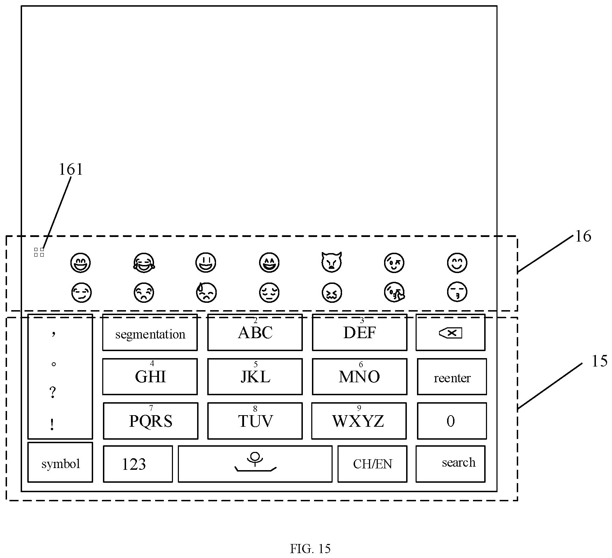

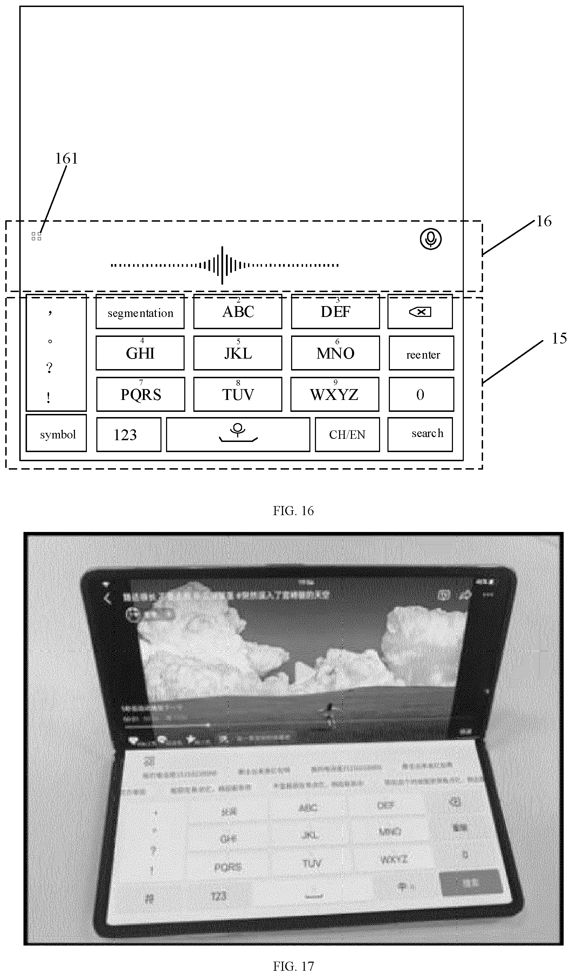

For example, FIG. 14 shows a sixth schematic diagram of a display style of a virtual keyboard according to an embodiment of the present disclosure. FIG. 15 shows a seventh schematic diagram of a display style of a virtual keyboard according to an embodiment of the present disclosure. FIG. 16 shows an eighth schematic diagram of a display style of a virtual keyboard according to an embodiment of the present disclosure. As shown in FIGS. 14 to 16, the virtual keyboard includes an input area 15 and a function area 16. FIG. 14 corresponds to the video scenario, and the function area 16 may display a recommended barrage/comment corresponding to the video scenario. FIG. 15 corresponds to the social scenario, and the function area 16 may display a recommended expression/common expression corresponding to the social scenario. FIG. 16 corresponds to the office scenario, and the function area 16 may display the voice-to-text function corresponding to the office scenario.

In an embodiment, the function area may be provided with the function key, and the function key may be used by the user to switch the current recommendation information.

For example, as shown in FIGS. 14 to 16, a function key 161 may be arranged at the upper left corner of the function area, and the user may switch the recommendation information by touching the function key 161.

In an embodiment of the present disclosure, the virtual keyboard is provided with the function area, so that the corresponding recommendation information can be intelligently displayed in different input application scenarios, and the recommendation information is highly correlated with the input application scenario, thereby improving the input efficiency.

In some embodiments of the present disclosure, the terminal includes a first display screen and a second display screen, and the first display screen is foldable relative to the second display screen;
the method further includes:
in response to a folding operation for the first display screen and/or the second display screen, if the first display screen and the second display screen after folding are not parallel, displaying a current application interface of the terminal on the first display screen, and displaying the virtual keyboard on the second display screen.

In an embodiment of the present disclosure, the terminal is a foldable screen terminal, including the first display screen and the second display screen, and the first display screen is foldable relative to the second display screen.

In response to the folding operation for the first display screen and/or the second display screen, if the first display screen and the second display screen after the folding are not parallel to make the first display screen and the second display screen in a hovering state, the current application interface of the terminal may be displayed on the first display screen, and the virtual keyboard may be displayed on the second display screen.

It can be understood that the user can fold the first display screen of the foldable screen terminal upward at a certain angle, so that the terminal can be stably placed on a desktop, table or other object with the help of the second display screen, freeing the user's hands. The first display screen faces the direction of human eye gaze, and the second display screen faces upward.

For example, FIG. 17 shows a schematic diagram of a usage style of a terminal according to an embodiment of the present disclosure. As shown in FIG. 17, after the first display screen is folded at a certain angle, the terminal is in the hovering state. The first display screen displays the current application interface of the terminal, facing the direction of human eye gaze, and the second display screen displays the virtual keyboard to facilitate the user input.

It can be understood that the virtual keyboard is displayed on the second display screen, and the virtual keyboard will not impose any blockage on the application interface displayed on the first display screen, thereby not only facilitating the user to input the information using both hands, but also not affecting the user's acquisition of the information on the first display screen.

It should be noted that the terminal can display the corresponding recommendation information in the function area of the virtual keyboard according to the application scenario corresponding to the application interface displayed on the first display screen, thereby further enhancing the efficiency of the user input.

It should be noted that the foldable screen terminal can realize the full screen display mode or the split-screen display mode. When the split-screen display mode is realized, the first split-screen interface can at least partially overlap with the first display screen.

In an embodiment of the present disclosure, for the foldable screen terminal in a folded state, it can be realized that the virtual keyboard is displayed on one display screen and the application interface is displayed on another display screen, thereby enabling the user input without affecting the user's acquisition of the application interface. Furthermore, according to the application scenario corresponding to the application interface, the function area in the virtual keyboard can also display the corresponding recommendation information, thereby enhancing the convenience of the virtual keyboard and improving the user's usage experience.

In the following, the method for displaying the virtual keyboard in embodiments of the present disclosure will be introduced by way of specific example. It should be noted that in the following specific example, the full-screen style is the first style, and the split-screen style and the floating style are the second style. In addition, the terminal determines the target style by responding to the touch operation for the first control key 11 and the second control key 12.

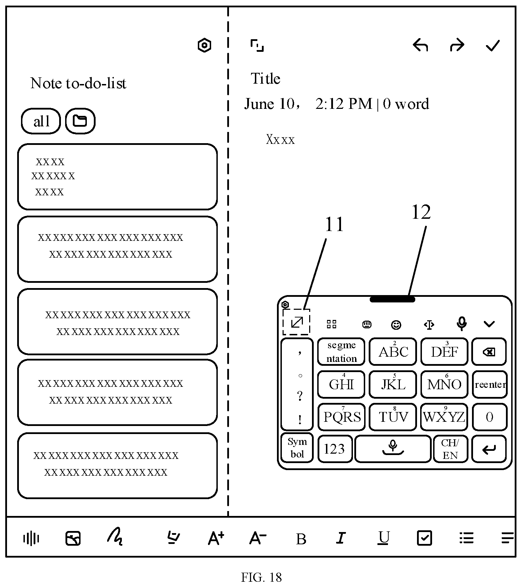

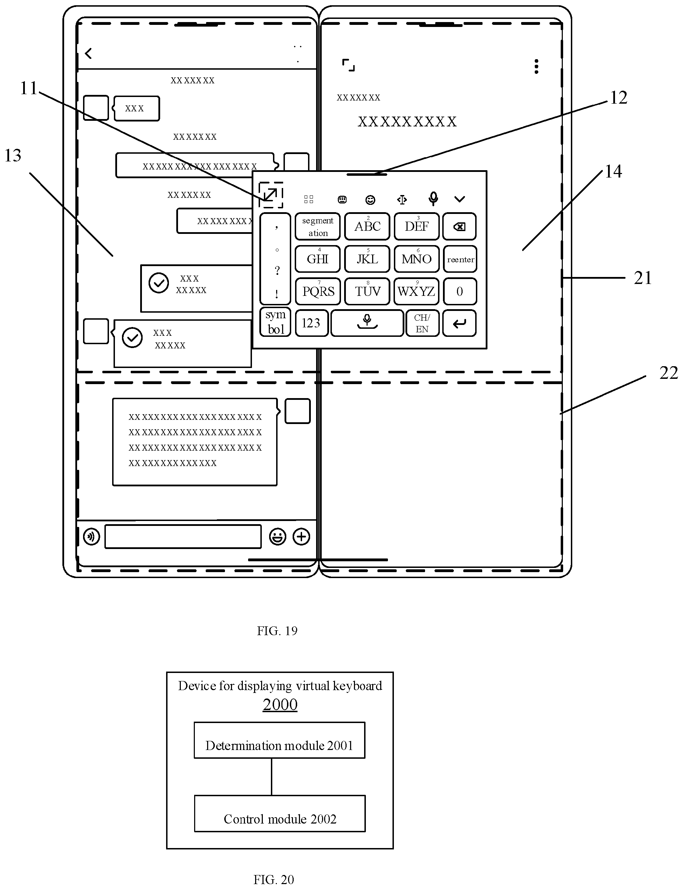

FIG. 18 shows a ninth schematic diagram of a display style of a virtual keyboard according to an embodiment of the present disclosure. FIG. 19 shows a tenth schematic diagram of a display style of a virtual keyboard according to an embodiment of the present disclosure.

Example 1: as shown in FIGS. 9 and 18, the terminal is in the full-screen display mode. When the display style of the virtual keyboard is the full-screen style (the first style) as shown in FIG. 9, the first control key 11 is clicked, or the second control key 12 is dragged towards the top of the terminal with the dragging end point in the first region 21, and the display style of the virtual keyboard may be changed to the floating style (the second style) shown in FIG. 18. When the display style of the virtual keyboard is the floating style as shown in FIG. 18, the first control key 11 is clicked, or the second control key 12 is dragged towards the bottom of the terminal with the dragging end point in the second region 22, the display style of the virtual keyboard may be changed to the full-screen style shown in FIG. 9.

Example 2: as shown in FIGS. 10, 12-13, and 19, when the terminal is in the split-screen display mode, different styles can be switched to each other. When the display style of the virtual keyboard is the full-screen style as shown in FIG. 10, the first control key 11 is clicked, and the display style of the virtual keyboard may be changed to the floating style or the split-screen style. The changed display position is the same as the historical display position when the floating style or the split-screen style was displayed last time, and the virtual keyboard in the second style as shown in FIGS. 12, 13, or 19 is obtained. Alternatively, the second control key 12 is dragged towards the top of the terminal with the dragging end point in the first region 21, and the virtual keyboard in the second style as shown in FIGS. 12, 13, or 19 is obtained.

When the display style of the virtual keyboard is the floating style as shown in FIG. 19, the first control key 11 is clicked, or the second control key 12 is dragged with the dragging end point in the second region 22, and the display style of the virtual keyboard may be changed to the full-screen style shown in FIG. 10. Alternatively, the second control key 12 is dragged with the dragging end point in a third region (not shown in the figure, equivalent to the second region 22 in the first split-screen interface 13), and the display style of the virtual keyboard may be changed to the split-screen style shown in FIG. 12. Alternatively, the second control key 12 is dragged with the dragging end point in a fourth region (not shown in the figure, equivalent to the second region 22 in the second split-screen interface 14), and the display style of the virtual keyboard may be changed to the split-screen style shown in FIG. 13.

It should be noted that when the first style is the split-screen style and the second style is the floating style, the third region and the fourth region overlap with a region where the split-screen style is located, which may also be understood as the second region 22 in one or more of the above embodiments.

When the display style of the virtual keyboard is the split-screen style as shown in FIG. 12, the first control key 11 is clicked, and the display style of the virtual keyboard may be changed to the full-screen style shown in FIG. 10. Alternatively, the second control key 12 is dragged with the dragging end point in the second region 22, and the display style of the virtual keyboard may be changed to the full-screen style shown in FIG. 10. The second control key 12 is slid with the sliding direction towards the second split-screen interface 14, and the display style of the virtual keyboard may be changed to the split-screen style as shown in FIG 13 The second control key 12 is dragged with the dragging end point in the first region 21, and the display style of the virtual keyboard may be changed to the floating style as shown in FIG. 19.

Embodiments of the present disclosure provide a device for displaying a virtual keyboard. FIG. 20 shows a schematic structural diagram of a device for displaying a virtual keyboard according to an embodiment of the present disclosure. As shown in FIG. 20, the device 2000 for displaying the virtual keyboard includes:
a determination module 2001, configured to, in response to a display style change operation for a currently displayed virtual keyboard, determine a target style corresponding to the display style change operation, wherein the virtual keyboard currently displayed by a terminal and a virtual keyboard corresponding to the target style are different in at least one of: a keyboard type, a display area, or a display position; and
a control module 2002, configured to control the virtual keyboard to be displayed in the target style.

In some embodiments of the present disclosure, the determination module 2001 is further configured to:
in response to the display style change operation, determine a second style as the target style if a display style of the currently displayed virtual keyboard is a first style; or
in response to the display style change operation, determine the first style as the target style if the display style of the currently displayed virtual keyboard is the second style;
an area ratio between a first-style virtual keyboard and a display screen of the terminal is greater than an area ratio between a second-style virtual keyboard and the display screen.

In some embodiments of the present disclosure, the display style change operation includes a movement operation for the virtual keyboard;
the determination module 2001 is further configured to:
in response to the movement operation, determine the target style according to a position of an operation end point of the movement operation.

In some embodiments of the present disclosure, the determination module 2001 is further configured to:
if a display style of the currently displayed virtual keyboard is a first style, and the operation end point of the movement operation is located in a first region, determine a second style as the target style; or
if the display style of the currently displayed virtual keyboard is the second style, and the operation end point of the movement operation is located in a second region, determine the first style as the target style;
the first region is located outside a display position of a virtual keyboard corresponding to the first style, and the second region is overlapped with the display position of the virtual keyboard corresponding to the first style.

In some embodiments of the present disclosure, if the terminal is in a split-screen display mode, the terminal includes a first split-screen interface and a second split-screen interface, the display position of the virtual keyboard corresponding to the first style is overlapped with a part of the first split-screen interface and a part of the second split-screen interface, and the first region includes a first sub-region located in the first split-screen interface and a second sub-region located in the second split-screen interface;
the control module 2002 is further configured to:
if the operation end point of the movement operation is located in the first sub-region, control the virtual keyboard to be displayed in the second style in the first split-screen interface; and
if the operation end point of the movement operation is located in the second sub-region, control the virtual keyboard to be displayed in the second style in the second split-screen interface.

In some embodiments of the present disclosure, the display style change operation includes a sliding operation for the virtual keyboard, and the determination module is further configured to:
if the terminal is in a split-screen display mode and a display style of the currently displayed virtual keyboard is a second style, switch the virtual keyboard to be displayed in a split-screen interface pointed to by a sliding direction of the sliding operation in response to the sliding operation for the virtual keyboard.

In some embodiments of the present disclosure, the display style change operation is a touch operation for a preset key of the virtual keyboard;
the determination module 2001 is further configured to:
in response to the touch operation, determine a second style as the target style if the terminal is in a split-screen display mode and a display style of the currently displayed virtual keyboard is a first style, wherein a display position of the virtual keyboard in the second style is determined by a historical display position where the virtual keyboard in the second style was last displayed by the terminal; or
in response to the touch operation, determine the first style as the target style if the terminal is in the split-screen display mode and the display style of the currently displayed virtual keyboard is the second style.

In some embodiments of the present disclosure, the virtual keyboard includes: an input area and a function area; and
the input area includes a plurality of virtual keys, and the input area is configured to input a character associated with the virtual key when the virtual key is touched, and the function area is configured to display recommendation information adapted to a current application scenario of the terminal.

In some embodiments of the present disclosure, the terminal includes a first display screen and a second display screen, and the first display screen is foldable relative to the second display screen;
the determination module 2001 is further configured to:
in response to a folding operation for the first display screen and/or the second display screen, if the first display screen and the second display screen after folding are not parallel, display a current application interface of the terminal on the first display screen, and display the virtual keyboard on the second display screen.

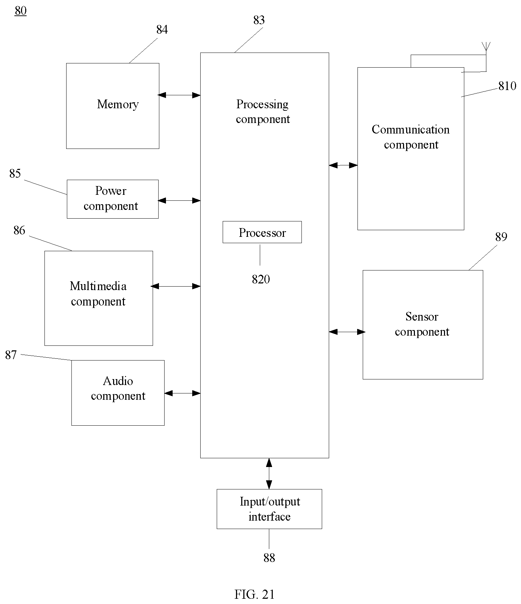

FIG. 21 shows a block diagram of a terminal according to an embodiment of the present disclosure. For example, the terminal may be a smart phone, a tablet computer, etc.

Referring to FIG. 21, the terminal 80 may include one or more of the following components: a processing component 83, a memory 84, a power component 85, a multimedia component 86, an audio component 87, an input/output (I/O) interface 88, a sensor component 89, and a communication component 810.

The processing component 83 typically controls overall operations of the terminal 80, such as the operations associated with display, telephone calls, data communications, camera operations, and recording operations. The processing component 83 may include one or more processors 820 to execute instructions to perform all or part of the steps in the above described methods. Moreover, the processing component 83 may include one or more modules which facilitate the interaction between the processing component 83 and other components. For instance, the processing component 83 may include a multimedia module to facilitate the interaction between the multimedia component 86 and the processing component 83.

The memory 84 is configured to store various types of data to support the operation of the terminal 80. Examples of such data include instructions for any applications or methods operated on the terminal 80, contact data, phonebook data, messages, pictures, video, etc. The memory 84 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 85 provides power to various components of the terminal 80. The power component 85 may include a power management system, one or more power sources, and any other components associated with the generation, management, and distribution of power in the terminal 80.

The multimedia component 86 includes a screen providing an output interface between the terminal 80 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 86 includes a front camera and/or a rear camera. The front camera and the rear camera may receive an external multimedia datum while the terminal 80 is in an operation mode, such as a photographing mode or a video mode. Each of the front camera and the rear camera may be a fixed optical lens system or have focus and optical zoom capability.

The audio component 87 is configured to output and/or input audio signals. For example, the audio component 87 includes a microphone (MIC) configured to receive an external audio signal when the terminal 80 is in an operation mode, such as a call mode, a recording mode, and a voice recognition mode. The received audio signal may be further stored in the memory 84 or transmitted via the communication component 810. In some embodiments, the audio component 87 further includes a speaker to output audio signals.

The I/O interface 88 provides an interface between the processing component 83 and peripheral interface modules, such as a keyboard, a click wheel, buttons, and the like. The buttons may include, but are not limited to, a home button, a volume button, a starting button, and a locking button.

The sensor component 89 includes one or more sensors to provide state assessments of various aspects of the terminal 80. For instance, the sensor component 89 may detect an open/closed state of the terminal 80, relative positioning of components, e.g., the display and the keypad, of the terminal 80, a change in position of the terminal 80 or a component of the terminal 80, a presence or absence of user contact with the terminal 80, an orientation or an acceleration/deceleration of the terminal 80, and a change in temperature of the terminal 80. The sensor component 89 may include a proximity sensor configured to detect the presence of nearby objects without any physical contact. The sensor component 89 may also include a light sensor, such as a CMOS or CCD image sensor, for use in imaging applications. In some embodiments, the sensor component 89 may also include an accelerometer sensor, a gyroscope sensor, a magnetic sensor, a pressure sensor, or a temperature sensor.

The communication component 810 is configured to facilitate communication, wired or wirelessly, between the terminal 80 and other devices. The terminal 80 may access a wireless network based on a communication standard, such as Wi-Fi, 4G, or 5G, or a combination thereof. In an embodiment, the communication component 810 receives a broadcast signal or broadcast associated information from an external broadcast management system via a broadcast channel. In an embodiment, the communication component 810 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the terminal 80 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 84 including instructions, the above instructions may be executed by the processor 820 in the terminal 80 for performing the above-described methods. For example, the non-transitory computer-readable storage medium may be a ROM, a Random Access Memory (RAM), a CD-ROM, a magnetic tape, a floppy disc, an optical data storage device, and the like.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for displaying a virtual keyboard, comprising:
in response to a display style change operation for a currently displayed virtual keyboard, determining (S801) a target style corresponding to the display style change operation, wherein the virtual keyboard currently displayed by a terminal and a virtual keyboard corresponding to the target style are different in at least one of: a keyboard type, a display area, or a display position; and
controlling (S802) the virtual keyboard to be displayed in the target style.

2. The method according to claim 1, wherein in response to the display style change operation for the currently displayed virtual keyboard, determining (S801) the target style corresponding to the display style change operation comprises:
in response to the display style change operation, determining a second style as the target style if a display style of the currently displayed virtual keyboard is a first style; or
in response to the display style change operation, determining the first style as the target style if the display style of the currently displayed virtual keyboard is the second style;
wherein an area ratio between a first-style virtual keyboard and a display screen of the terminal is greater than an area ratio between a second-style virtual keyboard and the display screen.

3. The method according to claim 1 or 2, wherein the display style change operation comprises a movement operation for the virtual keyboard;
in response to the display style change operation for the currently displayed virtual keyboard, determining (S801) the target style corresponding to the display style change operation comprises:
in response to the movement operation, determining the target style according to a position of an operation end point of the movement operation.

4. The method according to claim 3, wherein determining the target style according to the position of the operation end point of the move operation comprises:
if a display style of the currently displayed virtual keyboard is a first style, and the operation end point of the movement operation is located in a first region, determining a second style as the target style; or
if the display style of the currently displayed virtual keyboard is the second style, and the operation end point of the movement operation is located in a second region, determining the first style as the target style;
wherein the first region is located outside a display position of the virtual keyboard corresponding to the first style, and the second region is overlapped with the display position of the virtual keyboard corresponding to the first style.

5. The method according to claim 4, wherein if the terminal is in a split-screen display mode, the terminal comprises a first split-screen interface and a second split-screen interface, the display position of the virtual keyboard corresponding to the first style is overlapped with a part of the first split-screen interface and a part of the second split-screen interface, and the first region comprises a first sub-region located in the first split-screen interface and a second sub-region located in the second split-screen interface; and
controlling (S802) the virtual keyboard to be displayed in the target style comprises:
if the operation end point of the movement operation is located in the first sub-region, controlling the virtual keyboard to be displayed in the second style in the first split-screen interface; and
if the operation end point of the movement operation is located in the second sub-region, controlling the virtual keyboard to be displayed in the second style in the second split-screen interface.

6. The method according to any one of the preceding claims, wherein the display style change operation comprises a sliding operation for the virtual keyboard, and the method further comprises:
if the terminal is in a split-screen display mode and a display style of the currently displayed virtual keyboard is a second style, switching the virtual keyboard to be displayed in a split-screen interface pointed to by a sliding direction of the sliding operation in response to the sliding operation for the virtual keyboard.

7. The method according to any one of the preceding claims, wherein the display style change operation is a touch operation for a preset key of the virtual keyboard;
in response to the display style change operation for the currently displayed virtual keyboard, determining (S801) the target style corresponding to the display style change operation further comprises:
in response to the touch operation, determining a second style as the target style if the terminal is in a split-screen display mode and a display style of the currently displayed virtual keyboard is a first style, wherein a display position of the virtual keyboard in the second style is determined by a historical display position where the virtual keyboard in the second style was last displayed by the terminal; or
in response to the touch operation, determining the first style as the target style if the terminal is in the split-screen display mode and the display style of the currently displayed virtual keyboard is the second style.

8. The method according to any one of claims 1 to 7, wherein the virtual keyboard comprises an input area and a function area; and
the input area comprises a plurality of virtual keys, and the input area is configured to input a character associated with a virtual key when the virtual key is touched, and the function area is configured to display recommendation information adapted to a current application scenario of the terminal.

9. The method according to claim 8, wherein the terminal comprises a first display screen and a second display screen, and the first display screen is foldable relative to the second display screen;
the method further comprises:
in response to a folding operation for at least one of the first display screen or the second display screen, if the first display screen and the second display screen after the folding operation are not parallel, displaying a current application interface of the terminal on the first display screen, and displaying the virtual keyboard on the second display screen.

10. A device (2000) for displaying a virtual keyboard, comprising:
a determination module (2001), configured to, in response to a display style change operation for a currently displayed virtual keyboard, determine a target style corresponding to the display style change operation, wherein the virtual keyboard currently displayed by a terminal and a virtual keyboard corresponding to the target style are different in at least one of: a keyboard type, a display area, or a display position; and
a control module (2002), configured to control the virtual keyboard to display in the target style.

11. The device according to claim 10, wherein the determination module (2001) is further configured to:
in response to the display style change operation, determine a second style as the target style if a display style of the currently displayed virtual keyboard is a first style; or
in response to the display style change operation, determine the first style as the target style if the display style of the currently displayed virtual keyboard is the second style;
wherein an area ratio between a first-style virtual keyboard and a display screen of the terminal is greater than an area ratio between a second-style virtual keyboard and the display screen.

12. The device according to claim 10 or 11, wherein the display style change operation comprises a movement operation for the virtual keyboard;
the determination module (2001) is further configured to:
in response to the movement operation, determine the target style according to a position of an operation end point of the movement operation.

13. The device according to claim 12, wherein the determination module (2001) is further configured to:
if a display style of the currently displayed virtual keyboard is a first style, and the operation end point of the movement operation is located in a first region, determine a second style as the target style; or
if the display style of the currently displayed virtual keyboard is the second style, and the operation end point of the movement operation is located in a second region, determine the first style as the target style;
wherein the first region is located outside a display position of the virtual keyboard corresponding to the first style, and the second region is overlapped with the display position of the virtual keyboard corresponding to the first style.

14. A terminal, comprising:
a memory configured to store processor-executable instructions; and
a processor connected to the memory;
wherein the processor is configured to execute the method for displaying the virtual keyboard according to any one of claims 1 to 9.

15. A non-transitory computer-readable storage medium, wherein instructions in the storage medium, when executed by a processor of a computer, enable a terminal to execute the method for displaying the virtual keyboard according to any one of claims 1 to 9.
